# FASCICULE DE BREVET EUROPEEN

(11) **EP 2 682 238 B1**
(45) Date de publication et mention de la délivrance du brevet: **27.05.2015**
(21) Numéro de dépôt: 12005023.2
(22) Date de dépôt: 06.07.2012
(51) Int. Cl.: B26B 15/00, A01G 3/037, B23D 29/00, F16D 3/205

(54) **Outil électroportatif**
Mobiles Elektroinstrument
Portable electric tool

(43) Date de publication de la demande: 08.01.2014
(73) Titulaire: FELCO Motion SA, 2206 Les Geneveys-sur-Coffrane (CH)
(72) Inventeur: Zurcher, Alain, 1142 Pampigny (CH)
(74) Mandataire: P&TS SA (AG, Ltd.)

(56) Documents cités:
- EP-A1- 2 213 426
- DE-U1- 8 814 543
- FR-A- 846 943
- US-A- 1 553 312
- US-A- 3 609 994

## Description

### Domaine technique

La présente invention concerne un outil électroportatif et notamment, mais pas exclusivement, un outil portatif avec un actionneur électrique alimenté par une ou plusieurs batteries pour actionner une lame, un couteau ou un autre organe mobile par rapport à un autre organe mobile ou fixe, par exemple une contre-lame ou un contre couteau.

### Etat de la technique

On connait dans la technique plusieurs exemples d'outils portatifs de type sécateur ou cisailles dotés d'un actionneur électrique, hydraulique ou pneumatique, permettant ainsi d'alléger l'activité des opérateurs. Ces outils sont utilisés notamment dans le domaine de l'agriculture ou de la viticulture, par exemple pour des opérations de taille. Le même principe, c'est-à-dire l'intégration d'un actionneur électrique, pneumatique ou hydraulique dans un outil portatif, est également employé dans des cisailles, des pinces à sertir, des presses, et beaucoup d'autres outils utilisés en plusieurs activités industrielles.

La disponibilité d'accumulateurs électrochimique légers et performants a favorisé récemment le développement d'outils à actionnement électrique autonomes, plus légers et rapides que des outils correspondants à actionnement pneumatique ou hydraulique. Les actionneurs électriques linéaires contenus dans ces outils sont toutefois plus délicats que les vérins pneumatiques et doivent être protégés de l'attaque de poussières, corps étrangers et liquides, notamment dans le domaine de l'agriculture, lorsque les opérations de taille sont combinées avec des traitements de pulvérisation ou sont effectués en hiver.

Le développement de batteries et d'actionneurs plus performantes et compacts a d'ailleurs permis la réalisation d'outils de plus en plus puissants, qui sont appelés à générer des forces mécaniques très importantes. Ces efforts, notamment lorsqu'il s'agit d'efforts radiaux, peuvent réduire la fiabilité et la longévité de l'actionneur.

Dans la majorité des sécateurs électroportatifs à mouvement linéaire, l'actionneur opère soit en traction lors de la course de travail de l'outil en agissant directement sur la lame mobile, soit par l'intermédiaire d'un système de leviers auxiliaires. Compte tenu de la nécessité de limiter les dimensions de l'outil, la transmission de la force dans les outils connus est rarement optimale.

Les systèmes connus utilisent une ou plusieurs bielles pour transmettre les forces dans un outil électroportatif tel qu'un sécateur électrique. Par exemple EP2322030 (Lunatone) décrit un sécateur électrique dans lequel la lame mobile est entrainée par une bielle reliée en deux points permutables à la lame mobile. JP2010173045 (Max Co) concerne un sécateur motorisé dans lequel un écrou avance le long d'une vis filetée et entraine un système de quatre bielles connectées à la lame mobile. WO07059544 (Strube K.), FR2624417 (Pellenc) et EP2266388 (Lunatone) décrivent des sécateurs comprenant une tige filetée reliée par une bielle ou biellette à la lame mobile du sécateur.

La présence d'une ou plusieurs bielles dans un outil électroportatif nuit à sa longévité : en effet ces bielles sont sujettes à des efforts de flexion, c'est-à-dire des efforts radiaux, qui peuvent les casser, rendant ainsi inutilisable l'outil électroportatif.

Il existe donc un besoin d'un outil électroportatif dans lequel les désavantages de l'art antérieur sont réduits ou bien éliminés.

### Bref résumé de l'invention

Un but de la présente invention est de proposer un outil électroportatif exempt des limitations des outils électroportatifs connus.

Un autre but de l'invention est de proposer un outil électroportatif ayant une durée de vie plus longue que celle des outils électroportatifs connus.

Selon l'invention, ces buts sont atteints notamment au moyen d'un outil électroportatif selon la revendication 1 et au moyen d'un procédé pour un outil électroportatif selon la revendication 15.

L'outil électroportatif selon l'invention comprend :
- un élément mobile et un élément fixe
- un actionneur rotatif ayant un premier axe de rotation
- un écrou à billes ayant un deuxième axe de rotation
- une vis à billes ayant une première extrémité connectée à l'élément mobile
- un joint cardanique agencé pour être entrainé par ledit actionneur rotatif et pour entrainer l'écrou à billes en rotation sur la vis à billes, de façon à déplacer la vis à billes et donc l'élément mobile relativement à l'élément fixe.

Dans l'outil selon l'invention la vis à billes ne tourne pas, car elle a une première extrémité connectée à l'élément mobile, par exemple une lame mobile. La connexion peut être réalisée par exemple à l'aide d'une fourche ou de tout autre moyen équivalent. Le joint cardanique est entrainé par l'actionneur rotatif, par exemple un actionneur électrique comprenant un groupe moteur ou moteur-réducteur et entraine l'écrou à billes en rotation sur la vis à billes : l'écrou à billes tourne donc sur lui-même sans se déplacer axialement. Sa rotation fait avancer la vis à billes, qui entraîne à son tour l'élément mobile, par exemple une lame mobile, relativement à l'élément fixe.

En d'autres termes l'écrou à billes est uniquement mobile en rotation, la vis à billes est immobile en rotation et est déplacée uniquement dans la direction axiale, c'est-à-dire la direction correspondant à celle de la longueur de l'outil électroportatif lors de la rotation de l'écrou à billes.

Le joint cardanique dans le contexte de cette invention est donc utilisé pour entrainer l'écrou à billes en rotation sur la vis à billes de façon à transmettre un effort linéaire à la vis à billes. En d'autres termes la vis à billes travaille ainsi uniquement en traction ou en compression.

Dans une variante préférentielle le joint cardanique est composé d'un axe et de deux taquets insérés dans les extrémités de l'axe. L'axe est inséré dans un élément de support coopérant avec un motoréducteur ou directement avec le moteur. Les taquets entrainent en rotation une fourche connectée à l'écrou à billes.

Avantageusement le joint cardanique peut être lui-même maintenu à l'intérieur d'une première et d'une deuxième liaison de type rotule concentrique de rayons différents ou égaux, permettant la reprise des efforts axiaux bidirectionnels. Dans le contexte de cette invention l'expression « liaison de type rotule » désigne un contact entre deux surfaces sphériques. Dans ce contexte les surfaces sphériques définissent des paliers sphériques.

En d'autres termes le joint cardanique peut être avantageusement maintenu à l'intérieur de deux paliers sphériques concentriques permettant la reprise des efforts axiaux bidirectionnels. Il est ainsi possible d'éliminer tout effort radial sur la vis à billes et d'avoir une sortie en rotation variable angulairement.

Notamment une première bague d'appui, convexe, a une surface sphérique externe qui s'adapte exactement à surface sphérique interne d'une deuxième bague d'appui qui est concave et qui est reliée au corps de l'outil. Les deux surfaces sphériques permettent la transmission de la force axiale générée par l'actionneur rotatif à écrou à billes et constituent une première liaison de type rotule.

Une troisième bague d'appui, qui est convexe, comporte également une surface sphérique externe qui est concentrique avec la surface sphérique de la première bague d'appui. Cette surface sphérique s'adapte à une surface sphérique complémentaire d'une quatrième bague, formant avec cette dernière une seconde liaison de type rotule concentrique avec la première liaison.

Le système composé du joint cardanique et de la double liaison de type rotule permet une sortie en rotation variable angulairement. En effet il y a une position de la vis à bille dans laquelle par exemple le premier axe de rotation de l'actionneur rotatif et le deuxième axe de rotation de l'écrou à billes sont alignés.

Dans l'outil électroportatif selon l'invention donc la vis à billes qui actionne l'organe mobile, par exemple une lame mobile, n'est soumise à aucun moment fléchissant. Donc, dans l'outil électroportatif selon l'invention, tout effort radial sur la vis à billes est éliminé, ce qui permet d'améliorer la durée de vie de l'outil par rapport aux solutions connues.

En outre l'outil électroportatif selon l'invention a un diamètre réduit par rapport aux outils électroportatifs connus, car il n'y a aucune bielle ou système de bielles pour transmettre des forces, les déplacements desquelles requiert de la place dans l'outil qui donc est plus grand que l'outil selon l'invention. La réduction du diamètre de l'outil permet donc d'avoir un outil électroportatif qui peut être plus facilement manipulé par l'utilisateur et qui est aussi plus léger.

La présence d'un joint cardanique dans une double liaison concentrique de type rotule permet donc d'une part de reprendre les forces de l'actionneur rotatif et de l'autre part d'avoir une sortie variable angulairement. Avantageusement les forces de l'actionneur rotatif sont reprises en proximité de la main de l'utilisateur : la distance entre le point où les forces sont reprises, c'est-à-dire le point du pivotement du joint cardanique, et la lame mobile permet une meilleure décomposition des forces par rapport aux solutions connues.

Dans une variante préférentielle le joint cardanique selon l'invention est aussi homocinétique, c'est-à-dire qu'il entraine l'écrou à billes en rotation sur la vis à billes avec la même vitesse par laquelle il est entrainé par l'actionneur rotatif.

Dans cette variante la jonction élément mobile - vis à billes intègre un manchon racleur qui évite aux corps étrangers, à la poussière ou à des gouttes de liquide de pénétrer dans l'outil électroportatif de l'avant vers l'arrière de l'outil.

Dans le contexte de l'invention les termes « antérieur », « avant », ou « distal », sont utilisés pour désigner l'extrémité de l'outil normalement la plus éloignée de l'utilisateur, tandis que les termes « postérieur », « arrière », « proximal » sont utilisés pour indiquer l'extrémité de l'outil plus proche de l'utilisateur lors de l'usage normal. L'extrémité avant comporte en général les organes actifs de l'outil, par exemple des lames, tandis que l'extrémité arrière est munie d'une poignée permettant la saisie par l'utilisateur.

Le corps de l'outil électroportatif et le manchon racleur délimitent un volume protégé qui abrite la vis et l'écrou à billes et de préférence aussi le moteur électrique et toute unité électronique présente dans le capot de l'outil électroportatif.

Le manchon racleur peut être réalisé en un polymère à hautes prestations ayant les caractéristiques mécaniques requises, présentant un faible coefficient de friction, et préférablement autolubrifiant. Des matériaux adaptés à cette application sont, par exemple, le Teflon® (PTFE), le Polyéthylène (PE) le Polyéthylène téréphtalate (PET), le Polyéthylène Téréphtalate Polyester (PETP), le Polyamide, ou le Delrin® (POM). Cette liste n'est pas exhaustive. On peut également, toutefois, réaliser le manchon racleur en métal, par exemple en laiton. Le manchon racleur peut être une pièce d'usure, à remplacer lorsque nécessaire, et peut présenter sur son arête antérieure une lèvre afin de nettoyer la surface interne du corps de l'outil de toute saleté qui pourrait s'y déposer.

La double liaison de type rotule selon un aspect de l'invention a donc l'avantage d'empêcher toute transmission d'efforts radiaux à la vis à billes. Les forces radiales sont transmises par le manchon racleur au corps de l'outil. La boucle de forces ainsi obtenue est très compacte et la rigidité latérale est excellente. En même temps la vis à billes et l'écrou ne doivent supporter aucun effort radial ou de flexion, pour n'importe quelle position de l'élément mobile, ce qui augmente l'efficacité de transmission et la fiabilité de l'ensemble.

Dans une autre variante le volume protégé délimité par le corps de l'outil électroportatif et le manchon racleur héberge un système de positionnement de l'élément mobile, par exemple un ou plusieurs aimants permanents, par rapport à un ou plusieurs capteurs de position, par exemple des capteurs à effet Hall, des capteurs magnétorésistifs, etc.

Un support aimant comprenant par exemple un ou plusieurs aimants, peut être monté sur l'écrou à billes et/ou sur la vis à billes. Les aimants peuvent être de la même taille et de la même polarité. Ces aimants peuvent interagir avec un ou plusieurs capteurs de position placés sur un circuit intégré hébergé dans le corps de l'outil électroportatif, afin de mesurer la rotation de l'écrou et/ou la position de la vis à billes pour relier le nombre de tours moteur effectués et la rotation de l'écrou/la position de la vis à billes au cas où une technologie sans capteurs est utilisée pour compter le nombre de tours effectués par le moteur.

Ces aspects de l'invention peuvent être combinés selon les circonstances, comme on le verra par la suite.

L'invention concerne aussi un procédé pour transmettre des forces dans un outil électroportatif comprenant un élément mobile et un élément fixe, ce procédé comprenant les étapes suivantes :
- entrainement d'un joint cardanique par un actionneur rotatif
- entrainement d'un écrou à billes en rotation sur une vis à billes par ce joint cardanique, la vis à billes ayant une extrémité connectée à l'élément mobile
- déplacement de la vis à billes et donc de l'élément mobile relativement à l'élément fixe.

### Brève description des figures

Des exemples de mise en oeuvre de l'invention sont indiqués dans la description illustrée par les figures annexées dans lesquelles :
La figure 1 illustre une vue partiellement explosée d'un mode de réalisation de l'outil électroportatif selon l'invention.
La figure 2 illustre une partie de l'outil électroportatif selon l'invention, notamment un mode de réalisation de son joint cardanique.
La figure 3 illustre une vue de section d'un mode de réalisation de l'outil électroportatif selon l'invention (configuration lames ouvertes).
La figure 4 illustre une vue de section d'un mode de réalisation de l'outil électroportatif selon l'invention (configuration lames fermées).

### Exemple(s) de mode(s) de réalisation de l'invention

Dans la description suivante fournie à titre d'exemple, on fera référence, par simplicité, à un sécateur électroportatif. L'invention cependant n'est pas limitée à un tel instrument. L'invention n'est pas non plus limitée à l'agriculture, mais inclut aussi, par exemple des cisailles, des pinces, des presses, etc. pour des applications industrielles, médicales, ou tout autre domaine.

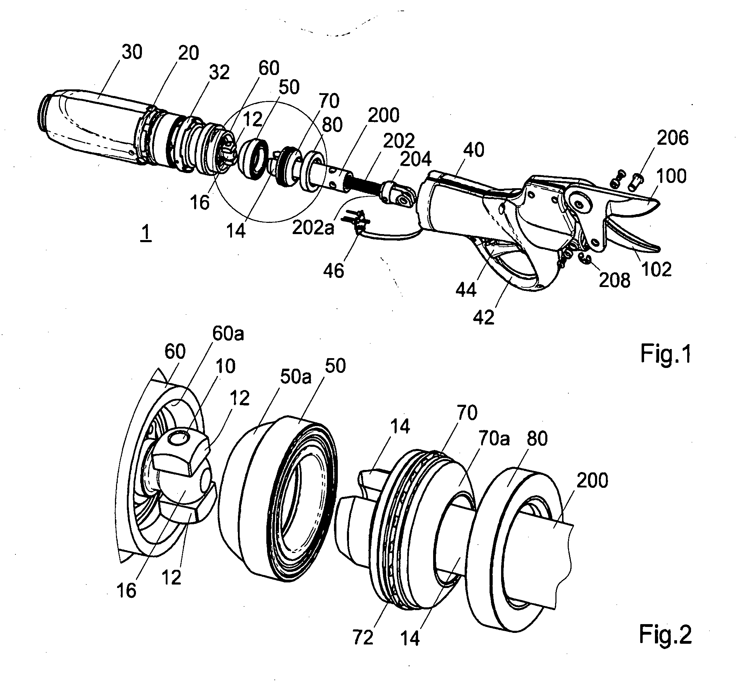

La figure 1 illustre une vue partiellement explosée d'un mode de réalisation de l'outil électroportatif 1 selon l'invention, qui dans l'exemple est un sécateur électrique. Ce sécateur comprend dans sa partie arrière un capot 30 lié à la partie avant du sécateur, composée par une coque 40 en métal, par exemple en aluminium. Deux coques plastiques extérieures peuvent recouvrir la coque 40. La coque métallique 40 sert de support à un actionneur rotatif non représenté, qui est logé dans le capot arrière 30 et qui est bloqué grâce à un manchon de fixation 20 et à une bague de fixation 32. Un ou plusieurs joints, par exemple des joints O-Ring, peuvent aussi être utilisés en correspondance de la liaison entre la partie avant et la partie arrière du sécateur.

Le manchon de fixation 20 peut être inséré au dessus de l'actionneur rotatif afin de garantir la tenue mécanique de l'actionneur par rapport au capot 30.

L'actionneur rotatif peut être un actionneur électrique linéaire comprenant un groupe moteur-réducteur. Le réducteur comprend par exemple une couronne dentée et des satellites non illustrés.

L'outil électroportatif selon l'invention comprend un écrou à billes 200 et une vis à billes 202 sur l'écrou 200 et ayant une première extrémité 202a connectée à la lame mobile 100. Dans l'exemple illustré la connexion entre la vis à billes 202 et la lame mobile est réalisée à l'aide d'une fourche 204 qui coopère avec un premier élément de fixation 206, par exemple un pivot, et un deuxième élément de fixation, par exemple un circlip 208.

Selon l'invention un joint cardanique, visibles dans le cercle de la figure 1 et sur la figure 2, est agencé pour être entrainé par l'actionneur rotatif et pour entrainer l'écrou à billes 200 en rotation sur la vis à billes 202, de façon à déplacer la vis à billes 202 et donc l'élément mobile 100 relativement à l'élément fixe 102.

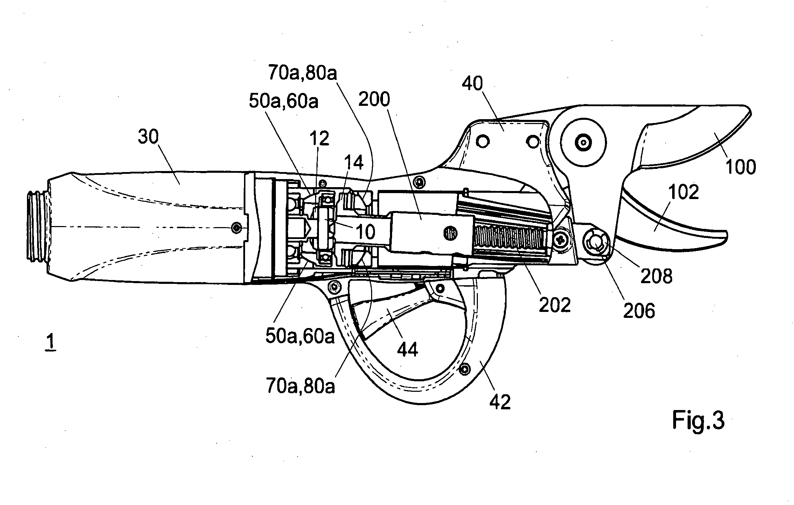

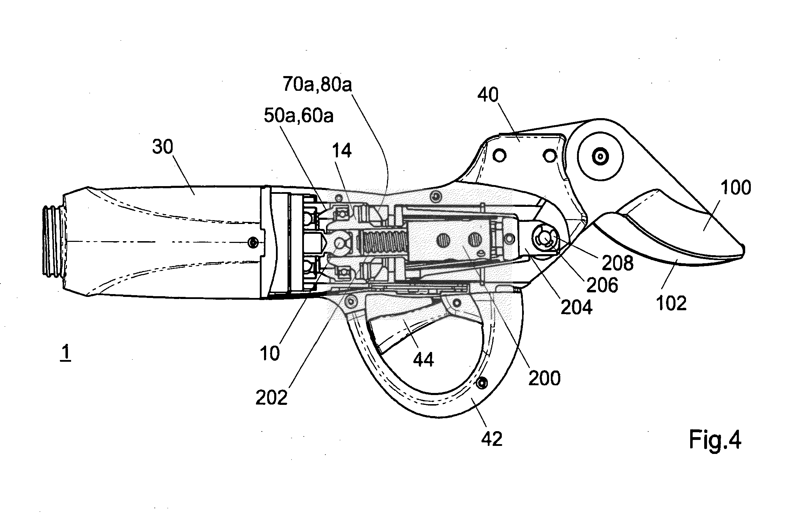

Comme visible sur les figures 3 et 4, qui montrent un mode de réalisation de l'outil électroportatif selon l'invention avec la lame mobile 100 en position ouverte respectivement fermée par rapport à la contre-lame 102, la vis à billes 202 ne tourne pas, car elle a la première extrémité 202a connectée à la lame mobile 100. Sur les figures 3 et 4 la gâchette pour simplicité a été représentée dans la même position.

Le joint cardanique est entrainé par l'actionneur rotatif et entraine l'écrou à billes 200 en rotation sur la vis à billes 202 : l'écrou à billes donc tourne sur lui-même sans se déplacer. Sa rotation fait avancer la vis à billes 202 qui donc déplace la lame mobile 100 relativement à la contre-lame 102.

En d'autres termes l'écrou à billes 200 est mobile uniquement en rotation, la vis à billes 202 est immobile en rotation et est déplacée uniquement dans la direction axiale, c'est-à-dire la direction correspondant à celle de la longueur de l'outil électroportatif lors de la rotation de l'écrou à billes 200. La vis à billes 202 travaille ainsi uniquement en traction ou en compression.

Dans la variante illustrée sur les figures, notamment sur la figure 2, le joint cardanique est composé d'un axe 10 et de deux taquets 12 qui sont insérés dans les extrémités de l'axe. Le corps de l'axe est inséré dans un élément de support 16 coopérant avec le motoréducteur ou directement avec le moteur. Les taquets entrainent en rotation une fourche 14 connectée à l'écrou à billes 200, par exemple insérée dans l'écrou à billes 200.

D'autres modes de réalisation du joint cardanique peuvent être imaginés dans le contexte de l'invention, comprenant par exemple deux fourches coopérant entre elles à l'aide d'une pièce de liaison par exemple en forme de croix.

Le joint cardanique illustré sur les figures est maintenu à l'intérieur d'une première et d'une deuxième liaison de type rotule concentrique de rayons différents ou égaux, permettant la reprise des efforts axiaux bidirectionnels.

Notamment une première bague d'appui 50, convexe, a une surface sphérique externe 50a qui s'adapte exactement à surface sphérique interne d'une deuxième bague d'appui 60 qui est concave et qui est reliée au corps de l'outil. Les deux surfaces sphériques 50a, 60a permettent la transmission de la force axiale générée par l'actionneur rotatif à l'écrou à billes 200 et constituent une première liaison de type rotule.

Une troisième bague d'appui 70, qui est convexe, comporte également une surface sphérique externe 70a qui est concentrique avec la surface sphérique 50a de la première bague d'appui. Cette surface sphérique s'adapte à une surface sphérique complémentaire d'une quatrième bague 80, formant avec cette dernière une seconde liaison de type rotule 70a, 80a, visibles sur les figures 3 et 4, concentrique avec la première liaison 50a, 60a. La troisième bague d'appui 70 peut comprendre des paliers 72.

Le système composé du joint cardanique et de la double liaison de type rotule permet une sortie en rotation variable angulairement. Dans l'outil électroportatif selon l'invention donc tout effort radial sur la vis à billes 202 est éliminé, ce qui permet d'améliorer la durée de vie de l'outil par rapport aux solutions connues.

La présence d'un joint cardanique dans une double liaison concentrique de type rotule permet donc d'une part de reprendre les forces de l'actionneur rotatif et de l'autre part d'avoir une sortie variable angulairement, comme visible sur les figures 3 et 4. Avantageusement les forces de l'actionneur rotatif sont reprises en proximité de la main de l'utilisateur : la distance entre le point où les forces sont reprises, c'est-à-dire le point du pivotement du joint cardanique, et la lame mobile 100 permet une décomposition des forces meilleure par rapport aux solutions connues.

Dans une variante préférentielle le joint cardanique selon l'invention est aussi homocinétique, c'est-à-dire qu'il entraine l'écrou à billes 200 en rotation sur la vis à billes 202 avec la même vitesse par laquelle il est entrainé par l'actionneur rotatif.

Dans une autre variante la jonction élément mobile - vis à billes intègre un manchon racleur non illustré qui évite aux corps étrangers, à la poussière ou à des gouttes de liquide de pénétrer dans l'outil électroportatif de l'avant vers l'arrière de l'outil.

Le manchon racleur peut être réalisé en un polymère à hautes prestations ayant les caractéristiques mécaniques requises, présentant un faible coefficient de friction, et préférablement autolubrifiant. Des matériaux adaptés à cette application sont, par exemple, le Teflon® (PTFE), le Polyéthylène (PE) le Polyéthylène téréphtalate (PET), le Polyéthylène Téréphtalate Polyester (PETP), le Polyamide, ou le Delrin® (POM). Cette liste n'est pas exhaustive. On peut également, toutefois, réaliser le manchon racleur en métal, par exemple en laiton. Le manchon racleur peut être une pièce d'usure, à remplacer lorsque nécessaire, et peut présenter sur son arête antérieure une lèvre afin de nettoyer la surface interne du corps de l'outil de toute saleté qui pourrait s'y déposer.

Dans une autre variante volume protégé délimité par le corps de l'outil électroportatif et le manchon racleur héberge un système de positionnement de l'élément mobile, par exemple un ou plusieurs aimants permanents, par rapport à un ou plusieurs capteurs de position, par exemple des capteurs à effet Hall, des capteurs magnétorésistifs, etc.

Un support aimant comprenant par exemple un ou plusieurs aimants, peut être monté sur l'écrou à billes et/ou sur la vis à billes. Les aimants peuvent être de la même taille et de la même polarité. Ces aimants peuvent interagir avec un ou plusieurs capteurs de position placés sur un circuit intégré 46 hébergé dans le corps de l'outil électroportatif, afin de mesurer la rotation de l'écrou et/ou la position de la vis à billes pour relier le nombre de tours moteur effectués et la rotation de l'écrou/la position de la vis à billes au cas où une technologie sans capteurs est utilisée pour compter le nombre de tours effectués par le moteur.

### Numéros de référence employés sur les figures

- 1: Outil électroportatif
- 10: Axe
- 12: Taquet
- 14: Fourche
- 16: Elément de support
- 20: Manchon de fixation
- 30: Capot arrière
- 32: Bague de fixation
- 40: Coque avant
- 42: Garde
- 44: Gâchette
- 46: Circuit intégré
- 50: Première bague d'appui
- 50a: Surface sphérique externe de la première bague d'appui
- 60: Deuxième bague d'appui
- 60a: Surface sphérique interne de la deuxième bague d'appui
- 70: Troisième bague d'appui
- 70a: Surface sphérique externe de la troisième bague d'appui
- 72: Pallier de la troisième bague d'appui
- 80: Quatrième bague d'appui
- 80a: Surface sphérique interne de la quatrième bague d'appui
- 100: Elément mobile
- 102: Elément fixe
- 200: Ecrou à billes
- 202: Vis à billes
- 202a: Extrémité de la vis à billes connectée à l'élément mobile
- 204: Elément de connexion vis à billes - élément mobile
- 206: Premier élément de fixation
- 208: Deuxième élément de fixation

## Revendications

1. Outil électroportatif (1) comprenant
- un élément mobile (100) et un élément fixe (102)
- un actionneur rotatif ayant un premier axe de rotation
- un écrou à billes (200) ayant un deuxième axe de rotation
- une vis à billes (202) ayant une première extrémité (202a) connectée à l'élément mobile (100), l'outil étant **caractérisé en ce qu'**il comprend aussi
- un joint cardanique (10, 12, 14) agencé pour être entrainé par ledit actionneur rotatif et pour entrainer l'écrou à billes (200) en rotation sur ladite vis à billes (202), de façon à déplacer ladite vis à billes (202) et donc ledit élément mobile (100) relativement audit élément fixe (102).

2. L'outil électroportatif selon la revendication 1, comprenant deux paliers sphériques (50a, 60a ; 70a, 80a), ledit joint cardanique (10, 12, 14) étant agencé pour être inséré entre lesdits paliers sphériques (50a, 60a ; 70a, 80a).

3. L'outil électroportatif selon l'une des revendications 1 ou 2, ledit joint cardanique comprenant un axe (10), deux taquets (12), et une fourche (14) connectée à l'écrou à billes.

4. L'outil électroportatif selon la revendication 3, ledit axe comportant un corps et deux extrémités, le corps dudit axe étant agencé pour être inséré dans un élément de support (16) coopérant avec ledit actionneur rotatif, lesdits taquets étant agencés pour être insérés dans les extrémités de l'axe et pour entrainer en rotation ladite fourche (14).

5. L'outil électroportatif selon l'une des revendications 1 à 4, comprenant une première liaison de type rotule (50a, 60a).

6. L'outil électroportatif selon l'une des revendications 1 à 5, comprenant une deuxième liaison de type rotule (70a, 80a).

7. L'outil électroportatif selon la revendication 6, ladite deuxième liaison de type rotule (70a, 80a) étant concentrique avec ladite première liaison de type rotule (50a, 60a).

8. L'outil électroportatif selon l'une des revendications 1 à 7, comprenant un manchon racleur.

9. L'outil électroportatif selon l'une des revendications 1 à 8, comprenant un système de positionnement de l'élément mobile.

10. L'outil électroportatif selon l'une des revendications 1 à 9, ledit écrou à billes (200) étant uniquement mobile en rotation, ladite vis à billes (202) étant immobile en rotation et étant déplacée uniquement dans la direction axiale lors de la rotation de l'écrou à billes (200).

11. L'outil électroportatif selon l'une des revendications 1 à 10, ladite première extrémité (202a) de ladite vis à billes (202) étant connectée à l'élément mobile (100) directement ou via une pièce de jonction telle qu'une fourche (204).

12. L'outil électroportatif selon l'une des revendications 1 à 11, ledit actionneur rotatif étant un actionneur électrique linéaire comprenant un groupe moteur-réducteur agissant sur ledit joint cardanique qui entraine en rotation ledit écrou à billes (200) qui entraine en translation ladite vis à billes (202).

13. L'outil électroportatif selon l'une des revendications 1 à 12, ledit joint cardanique étant homocinétique.

14. L'outil électroportatif selon l'une des revendications 1 à 13, formant sécateur ou cisaille.

15. Procédé pour transmettre des forces dans un outil électroportatif (1) comprenant un élément mobile (100) et un élément fixe (102), ledit procédé comprenant les étapes suivantes :
- entrainement d'un joint cardanique (10, 12, 14) par un actionneur rotatif
- entrainement d'un écrou à billes (200) en rotation sur une vis à billes (202) par ledit joint cardanique (10, 12, 14) inséré dans deux paliers sphériques (50a, 60a ; 70a, 80a), ladite vis à billes ayant une extrémité connectée audit élément mobile (100)
- déplacement de ladite vis à billes (202) et donc dudit élément mobile (100) relativement audit élément fixe (102).

## Patentansprüche

1. Ein tragbares Elektrowerkzeug aufweisend
- ein bewegliches Element (100) und ein festes Element (102)
- einen rotierbaren Aktuator mit einer ersten Rotationsachse
- eine Kugelmutter (200) aufweisend eine zweite Rotationsachse
- eine Kugelschraube (202) aufweisend eine erste Extremität (202a) verbunden mit dem beweglichen Element (100),
wobei das Werkzeug **gekennzeichnet dadurch** gekennzeichnet ist, dass es auch aufweist:
- ein Kardangelenk (10, 12, 14) ausgebildet von dem rotierbaren Aktuator angetrieben zu werden und die Kugelmutter (200) auf der Kugelschraube in Rotation zu bringen, um die Kugelschraube (202) und somit das bewegliche Element (100) relativ zu dem festen Element (102) zu bewegen.

2. Das tragbare Elektrowerkzeug nach Anspruch 1, aufweisend zwei sphärische Lager (50a, 60a; 70a, 80a), wobei das Kardangelenk (10, 12, 14) ausgebildet sit, zwischen die sphärischen Lager (50a, 60a; 70a, 80a) eingeführt zu werden.

3. Das tragbare Elektrowerkzeug nach einem der Ansprüche 1 oder 2, wobei das Kardangelenk eine Achse (10), zwei Ausnehmungen (12) und eine Gabel (14) aufweist.

4. Das tragbare Elektrowerkzeug nach Anspruch 3, wobei die Achse einen Körper und zwei Enden aufweist, wobei der Körper der Achse (10) ausgebildet ist, in ein Lagerelement (16) mit dem rotierbaren Aktuator kooperierend einzugreifen, wobei die Ausnehmungen (12) ausgebildet sind in die Enden der Achse eingeführt zu werden und die Gabel (14) in Rotation zu bringen.

5. Das tragbare Elektrowerkzeug nach einem der Ansprüche 1 bis 4, aufweisend eine erste Verbindung eines Kugelgelenktyps.

6. Das tragbare Elektrowerkzeug nach einem der Ansprüche 1 bis 5, aufweisend eine zweite Verbindung eines Kugelgelenktyps.

7. Das tragbare Elektrowerkzeug nach Anspruch 6, wobei die zweite Verbindung des Kugelgelenktyps (70a, 80a) konzentrisch mit der ersten Verbindung des Kugelgelenktyps (50a, 60a) ist.

8. Das tragbare Elektrowerkzeug nach einem der Ansprüche 1 bis 7, aufweisend eine Abschabhülse.

9. Das tragbare Elektrowerkzeug nach einem der Ansprüche 1 bis 8, aufweisend ein Positionssystem des beweglichen Elements.

10. Das tragbare Elektrowerkzeug nach einem der Ansprüche 1 bis 9, wobei die Kugelmutter (200) nur in Rotation beweglich ist, wobei die Kugelschraube (202) für Rotation unbeweglich ist und nur in der axialen Richtung auf eine Rotation der Kugelmutter (200) bewegbar ist.

11. Das tragbare Elektrowerkzeug nach einem der Ansprüche 1 bis 10, wobei das erste Ende (202a) der Kugelschraube (202) mit dem beweglichen Element (100) direkt oder mittels einem Verbindungsteil, wie eine Gabel (204), verbunden ist.

12. Das tragbare Elektrowerkzeug nach einem der Ansprüche 1 bis 11, wobei der rotierbare Aktuator ein linearer elektrischer Aktuator ist, der eine Gebtriebemotorgruppe aufweist, die auf das Kardangelenk (10, 12, 14) wirkt, die die Kugelmutter (200) in Rotation antreibt, die die Kugelschraube (202) in Translation bringt.

13. Das tragbare Elektrowerkzeug nach einem der Ansprüche 1 bis 12, wobei das Kardangelenk (10, 12, 14) homokinetisch ist.

14. Das tragbare Elektrowerkzeug nach einem der Ansprüche 1 bis 13 eine Baum- oder Heckenschere ausbildet.

15. Ein Verfahren zum Übertragen von Kräften in einem tragbaren Elektrowerkzeug (1) mit einem beweglichen Element (100) und einem festen Element (102) aufweisend die folgenden Schritte:
- Antreiben eines Kardangelenks (10, 12, 14) durch einen rotierbaren Aktuator;
- Antreiben einer Kugelmutter (200) in Rotation auf einer Kugelschraube (202) durch das in zwei sphärische Lager (50a, 60a; 70a, 80a) eingesetzte Kardangelenk (10, 12, 14), wobei die Kugelschraube ein mit dem beweglichen Element (100) verbundenes Ende aufweist;
- Bewegen der Kugelschraube (202) und somit des beweglichen Elements (100) relativ zu dem festen Element (102).

## Claims

1. A handheld power tool (1) comprising
- a movable element (100) and a fixed element (102)
- a rotatable actuator having a first axis of rotation
- a ball nut (200) having a second axis of rotation
- a ball screw (202) having a first end (202a) connected to the movable element (100), the tool being **characterized in that** it also comprises:
- a universal joint (10, 12, 14) configured to be driven by said rotatable actuator and to drive the ball nut (200) in rotation on the ball screw (202) so as to move said ball screw (202) and thus said movable element (100) relative to said fixed element (102).

2. The handheld power tool as claimed in claim 1, comprising two spherical bearings (50a, 60a; 70a, 80a), said universal joint (10, 12, 14) being configured to be inserted between said spherical bearings (50a, 60a; 70a, 80a).

3. The handheld power tool as claimed in one of claims 1 or 2, said universal joint comprising a shaft (10), two lugs (12), and a fork (14) connected to the ball nut (200).

4. The handheld power tool as claimed in claim 3, said shaft comprising a body and two ends, the body of said shaft (10) being configured to be inserted in a support element (16) cooperating with said rotatable actuator, said lugs (12) being configured to be inserted in the ends of the shaft and to drive said fork (14) in rotation.

5. The handheld power tool as claimed in one of claims 1 to 4, comprising a first linkage of the ball type (50a, 60a).

6. The handheld power tool as claimed in one of claims 1 to 5, comprising a second linkage of the ball type (70a, 80a).

7. The handheld power tool as claimed in claim 6, said second linkage of the ball type (70a, 80a) being concentric with said first linkage of the ball type (50a, 60a).

8. The handheld power tool as claimed in one of claims 1 to 7, comprising a scraper sleeve.

9. The handheld power tool as claimed in one of claims 1 to 8, comprising a system for positioning the movable element (100).

10. The handheld power tool as claimed in one of claims 1 to 9, said ball nut (200) being solely rotatable, said ball screw (202) being fixed against rotation and being moved solely in the axial direction during the rotation of the ball nut (200).

11. The handheld power tool as claimed in one of claims 1 to 10, said first end (202a) of said ball screw (202) being connected to the movable element (100) directly or via a junction piece, such as a fork (204).

12. The handheld power tool as claimed in one of claims 1 to 11, said rotatable actuator being a linear electrical actuator comprising a geared motor group acting on said universal joint (10, 12, 14), which drives in rotation said ball nut (200), which drives said ball screw (202) in translation

13. The handheld power tool as claimed in one of claims 1 to 12, said universal joint (10, 12, 14) being a constant-velocity joint.

14. The handheld power tool as claimed in one of claims 1 to 13, forming a pruning shear or shears.

15. A method for transmitting forces in a handheld power tool (1) comprising a movable element (100) and a fixed element (102), said method comprising the following steps:
- driving a universal joint (10, 12, 14) by a rotatable actuator
- driving a ball nut (200) in rotation on a ball screw (202) via said universal joint (10, 12, 14) inserted in two spherical bearings (50a, 60a; 70a, 80a), said ball screw (202) having an end connected to said movable element (100)
- moving said ball screw (202) and thus said movable element (100) relative to said fixed element (102).
